# EUROPEAN PATENT APPLICATION

(11) **EP 4 773 202 A1**
(43) Date of publication of application: **08.07.2026**
(21) Application number: 25808830.1
(22) Date of filing: 20.03.2025
(51) Int. Cl.: H01M 4/13, H01M 10/42, H01M 10/058, H01M 10/052, H01M 4/139, H01M 50/593

(54) **ELECTRODE SHEET AND MANUFACTURING METHOD THEREFOR, SECONDARY BATTERY AND ELECTRICAL APPARATUS**

(30) Priority: 10.05.2024 CN 202410578221
(71) Applicant: Ningde Amperex Technology Limited, Ningde, Fujian 352100 (CN)
(72) Inventor: YAN, Jiaxiao, Ningde City, Fujian Province 352100 (CN); QU, Changming, Ningde City, Fujian Province 352100 (CN)
(74) Representative: Kraus & Lederer PartGmbB
(86) International application number: PCT/CN2025/083798
(87) International publication number: WO 2025/232355

(57) **Abstract**

This application discloses an electrode plate, a manufacturing method thereof, a secondary battery, and an electric apparatus. The electrode plate includes a current collector, an active material layer, a conductive member, and an insulating layer. The current collector includes a first portion and a second portion adjacently disposed along a first direction. The active material layer is disposed on the first portion, and the active material layer includes a first covering portion and a second covering portion sequentially disposed along the first direction, where along a thickness direction of the current collector, a thickness of the second covering portion is less than a thickness of the first covering portion. The conductive member is connected to the second portion. The insulating layer is disposed on the second portion, on at least part of a surface of the conductive member away from the current collector, and on at least part of a surface of the second covering portion away from the current collector. Compared with existing electrode plates, the electrode plate with the above structure can reduce a risk of excessive thickness at an edge of the active material layer caused by the insulating layer being applied onto the active material layer during manufacturing, and is conducive to increasing the energy density of the secondary battery.

## Description

This application claims priority to the Chinese patent application No. 202410578221.0, filed with the China National Intellectual Property Administration on May 10, 2024 and entitled "ELECTRODE PLATE, MANUFACTURING METHOD THEREOF, SECONDARY BATTERY, AND ELECTRIC APPARATUS", which is incorporated herein by reference in its entirety.

### TECHNICAL FIELD

Some embodiments of this application relate to the field of secondary batteries, in particular to an electrode plate, a manufacturing method thereof, a secondary battery, and an electric apparatus.

### BACKGROUND

A secondary battery is an apparatus capable of being repeatedly charged and discharged, and is typically formed by a housing, an electrode assembly disposed within the housing, and a tab connected to the electrode assembly, where the tab can be connected to an electric device. The electrode assembly includes electrode plates of different polarities and a separator, with the separator disposed between two adjacent electrode plates of different polarities. The electrode plate includes a current collector and an active material layer disposed on a surface of the current collector. The current collector may be a conventional current collector or a composite current collector.

Currently, the space available for installing a secondary battery in an electric device is relatively limited. Within a given space, a higher capacity of the secondary battery is more conducive to the endurance of the electric apparatus. Therefore, increasing the energy density of the secondary battery is becoming increasingly important.

### SUMMARY

To resolve the above technical problem, some embodiments of this application provide an electrode plate, a secondary battery, and an electric apparatus, which can increase the energy density in a thickness direction.

Some embodiments of this application adopt the following technical solutions to resolve the technical problem.

The electrode plate includes a current collector, an active material layer, a conductive member, and an insulating layer. The current collector includes a first portion and a second portion adjacently disposed along a first direction. The active material layer is disposed on the first portion, and the active material layer includes a first covering portion and a second covering portion sequentially disposed along the first direction. Along a thickness direction of the current collector, a thickness of the second covering portion is less than a thickness of the first covering portion. The conductive member is connected to the second portion. The insulating layer is disposed on the second portion, on at least part of a surface of the conductive member away from the current collector, and on at least part of a surface of the second covering portion away from the current collector. The first direction is perpendicular to the thickness direction of the current collector.

In this way, when the insulating layer covers the active material layer, a space obtained from a thickness difference between the second covering portion and the first covering portion in the active material layer can be utilized to reduce a thickness at an overlapping position of the insulating layer and the active material layer, reducing a risk of excessive thickness at the overlapping position of the active material layer and the insulating layer caused by the insulating layer being applied onto an edge of the active material layer, which is beneficial to increasing an energy density of the secondary battery. In addition, the insulating layer can reduce a risk of burr exposure on the conductive member and the second portion, thereby reducing a risk of short-circuiting of the electrode plate due to burrs piercing a separator in a secondary battery made from this electrode plate, which is conducive to improving safety of the secondary battery.

Optionally, along the thickness direction of the current collector, a difference between the thickness of the first covering portion and the thickness of the second covering portion is denoted as t₁, satisfying 10 µm < t₁ ≤ 50 µm. When t₁ < 10 µm, there is a risk of excessive thickness at a region where the insulating layer covers the second covering portion. When t₁ > 50 µm, application of the insulating layer is affected, and a supporting force received by the conductive member decreases, causing the conductive member to sag easily. During manufacturing, a region where the conductive member is located is prone to wrinkling or folding when the electrode plate is wound or unwound. When 10 µm < t₁ ≤ 50 µm, the thickness of the electrode plate at the second covering portion is relatively appropriate, reducing a risk of wrinkling or folding during winding or unwinding of the electrode plate in the manufacturing process, and reducing a risk of capacity reduction of the secondary battery due to loss of active material.

Optionally, along the first direction, a width of the second covering portion is denoted as d₁, satisfying 1 mm < d₁ ≤ 2 mm. In this way, the width of the second covering portion along the first direction is relatively appropriate. Since a region where the second covering portion of the electrode plate is located is thinner, when greater than 2 mm, a risk of poor contact caused by a large spacing between a positive electrode plate and a negative electrode plate of the secondary battery in the thickness direction of the current collector increases. In addition, the width of the second covering portion along the first direction being greater than 1 mm reduces a risk of the insulating layer failing to cover the second covering portion due to deviations in double-sided application of the active material on the electrode plate, which is conducive to improving stability of the secondary battery.

Optionally, 1 mm < d₁ ≤ 1.5 mm. In this way, the risk of poor contact caused by a large spacing between the positive electrode plate and the negative electrode plate of the secondary battery made from this electrode plate, as well as the risk of the insulating layer failing to cover the second covering portion due to deviations in double-sided application of the active material on the electrode plate can be further reduced.

Understandably, an application range of the insulating layer is predetermined. When the electrode plate is flipped between a front side and a back side to be coated with the active material, it is difficult to ensure alignment of the active materials applied onto the front side and the back side. Therefore, a size of the second covering portion needs to be increased, meaning the size of the second covering portion needs to be greater than 1 mm to ensure that an insulating material is applied onto the second covering portion during manufacturing.

Optionally, the insulating layer includes a first insulating portion overlapping with the first covering portion. Along the first direction, a width of the first insulating portion is denoted as d₂, satisfying 0.1 mm < d₂ ≤ 1.6 mm. When d₂ < 0.1 mm, an insulating material forming the first insulating portion cannot be applied onto the second covering portion. When d₂ > 1.6 mm, the first insulating portion covers too much of the second covering portion, and an active material beneath the first insulating portion cannot function, affecting the capacity of the secondary battery. Therefore, when the width d₂ of the first insulating portion satisfies 0.1 mm < d₂ ≤ 1.6 mm, a region where the first insulating portion covers the second covering portion is relatively appropriate, reducing a risk of affecting the energy density of the secondary battery due to the first insulating portion covering too much of the active material, which is conducive to increasing the capacity of the secondary battery.

Optionally, 0.1 mm < d₂ ≤ 1 mm. This can further ensure that the insulating material is applied onto the second covering portion while preventing the first insulating portion from covering too much of the second covering portion.

Optionally, the insulating layer includes a first insulating portion, a second insulating portion, and a third insulating portion. The first insulating portion, the second insulating portion, and the third insulating portion are sequentially disposed along the first direction. The first insulating portion overlaps with the first covering portion, and the third insulating portion covers the surface of the conductive member away from the current collector. Along the thickness direction of the current collector, a thickness of the second insulating portion is denoted as t₂, satisfying 10 µm < t₂ ≤ 50 µm. When t₂ ≤ 10 µm, the insulating layer cannot cover the entire region where the conductive member is connected to the second portion during manufacturing of the electrode plate, resulting in a risk of internal short-circuiting during manufacturing of the secondary battery. When t₂ > 50 µm, a thickness at the second insulating portion exceeds a sum of thicknesses of the first portion and the active material layer, posing a risk of excessive thickness at a head portion of the secondary battery. Thus, when 10 µm < t₂ ≤ 50 µm, a risk of excessive thickness in a region where the second portion of the electrode plate is located is reduced, which is conducive to reducing a risk of edge bulging during winding of the electrode plate.

And/or, along the first direction, a width of the insulating layer is denoted as d₃, satisfying 1.2 mm < d₃ < 5 mm. When d₃ is less than 1.2 mm, the insulating layer cannot cover an entire size gap between the positive electrode plate and the negative electrode plate when this electrode plate is used to form an electrode assembly, posing a risk of internal short-circuiting caused when the negative electrode plate extends beyond the insulating layer to contact a tab of the positive electrode plate. When d₃ is greater than 5 mm, the insulating layer affects a welding position of the tab during subsequent manufacturing of the secondary battery, and an extended width of the conductive member is required for tab welding, resulting in space loss and affecting the energy density. Thus, the width d₃ of the insulating layer satisfying 1.2 mm < d₃ < 5 mm is conducive to increasing the energy density and safety of the secondary battery made from this electrode plate.

Optionally, the conductive member and the second portion are connected by roll welding to form a weld mark portion. A size of the weld mark portion in the first direction is denoted as d₄, satisfying 1 mm < d₄ < 5 mm. When d₄ < 1 mm, a yield rate and welding strength of the roll welding process decrease, which is detrimental to connection between the conductive member and the second portion. When d₄ > 5 mm, a welding position between the tab and the conductive member during manufacturing of the secondary battery is affected, and an extended length of the conductive member is required to achieve the connection between the conductive member and the tab, resulting in space loss. Thus, 1 mm < d₄ < 5 mm is conducive to enhance the connection strength between the conductive member and the second portion, and is also conducive to provide an appropriate welding position between the conductive member and the second portion, thereby increasing the energy density of the secondary battery .

Optionally, the electrode plate further includes an undercoating layer. Along the thickness direction of the current collector, the undercoating layer is disposed between the first portion and the active material layer. The undercoating layer can enhance adhesion strength between the current collector and active material in the active material layer, reducing a risk of the active material in the active material layer detaching from the current collector.

Optionally, the active material layer includes a first active material layer and a second active material layer, and the undercoating layer includes a first undercoating layer and a second undercoating layer. The current collector includes a base layer, a first conductive layer, and a second conductive layer. The first conductive layer is disposed on one surface of the base layer, and the second conductive layer is disposed on another surface of the base layer. A surface of the first conductive layer away from the base layer is sequentially provided with the first undercoating layer and the first active material layer, and a surface of the second conductive layer away from the base layer is sequentially provided with the second undercoating layer and the second active material layer. In this way, the current collector is a composite current collector, and thicknesses of the first conductive layer and the second conductive layer disposed on both sides of the base layer are reduced. When the current collector has a mechanical damage caused by an external impact, generation of metal burrs is reduced, thereby reducing a risk of short-circuiting.

Optionally, the conductive member includes a first conductive member and a second conductive member. The first conductive member is connected to the first conductive layer, and the second conductive member is connected to the second conductive layer.

Some embodiments of this application further adopt the following technical solution to resolve the technical problem.

A secondary battery includes the above-described electrode plate.

Some embodiments of this application further adopt the following technical solution to resolve the technical problem.

An electric apparatus includes the above-described secondary battery.

Some embodiments of this application further adopt the following technical solution to resolve the technical problem.

A manufacturing method of electrode plate is provided for manufacturing the above-described electrode plate. The manufacturing method includes: providing a current collector and a conductive member, where the current collector includes a coated region and an uncoated region; applying an active material onto the coated region of the current collector to form an active material layer, where the active material layer includes a first covering portion and a second covering portion with unequal thicknesses; conductively connecting the conductive member to the uncoated region of the current collector; and applying an insulating material onto the second portion, onto at least part of a surface of the conductive member away from the current collector, and onto at least part of a surface of the second covering portion away from the current collector to form an insulating layer.

During use of the above manufacturing method, the active material is first applied onto the coated region of the current collector, then the conductive member is connected to the uncoated region of the current collector, and then the insulating material is applied to form the insulating layer. Compared with conventional methods in which the insulating material of the insulating layer and the active material layer are applied simultaneously before the conductive member is connected to the uncoated region, this method can realize overlapping of a connection region between the conductive member and the uncoated region with the insulating material forming the insulating layer, reducing a risk of damaging the insulating layer due to connection of the conductive member to the uncoated region, and also facilitating a reduction in thickness of the electrode plate at the uncoated region, thereby helping to increase the energy density.

Optionally, the conductive member is connected to the uncoated region of the current collector by roll welding.

Beneficial effects of some embodiments of this application are as follows. The electrode plate provided by some embodiments of this application includes a current collector, an active material layer, a conductive member, and an insulating layer. The current collector includes a first portion and a second portion adjacently disposed along a first direction. The active material layer is disposed on the first portion, and the active material layer includes a first covering portion and a second covering portion sequentially disposed along the first direction. Along the thickness direction of the current collector, the thickness of the second covering portion is less than the thickness of the first covering portion. The conductive member is connected to the second portion. The insulating layer is disposed on the second portion, on at least part of a surface of the conductive member away from the current collector, and on at least part of a surface of the second covering portion away from the current collector. Compared with existing electrode plates, the electrode plate with the above structure can reduce a risk of excessive thickness at an edge of the active material layer caused by the insulating layer being applied onto the active material layer during manufacturing, which is conducive to increasing the energy density of the secondary battery.

### BRIEF DESCRIPTION OF DRAWINGS

One or more embodiments are used as examples for description by using figures in corresponding accompanying drawings. These example descriptions impose no limitation on these embodiments. Elements with a same reference sign in the accompanying drawings represent similar elements. Unless otherwise stated, the figures in the accompanying drawings impose no limitation on a scale.
FIG. 1 is a plane view of an electrode plate according to one embodiment of this application;
FIG. 2 is a schematic diagram of a cross-section along cutting line AA in FIG. 1;
FIG. 3 is a cross-sectional view of a current collector;
FIG. 4 is a schematic diagram of a partial structure in FIG. 2;
FIG. 5 is a structural block diagram of a secondary battery according to another embodiment of this application;
FIG. 6 is a cross-sectional view of an electrode assembly;
FIG. 7 is another cross-sectional view of an electrode assembly; and
FIG. 8 is a flowchart of a manufacturing method of electrode plate according to another embodiment of this application.

In the figures: 1. electrode plate; 2. current collector; 3. active material layer; 4. conductive member; 5. insulating layer; 6. undercoating layer; 21. first portion; 22. second portion; 31. first covering portion; 32. second covering portion;
201. base layer; 202. first conductive layer; 203. second conductive layer;
301. first active material layer; 302. second active material layer;
41. first conductive member; 42. second conductive member; 401. weld mark portion;
51. first insulating portion; 52. second insulating portion; 53. third insulating portion; 501. first insulating layer; 502. second insulating layer;
61. first undercoating layer; 62. second undercoating layer;
100. secondary battery; 110. housing; 120. electrode assembly; and 130. tab.

### DETAILED DESCRIPTION

To facilitate understanding of this application, a more detailed description of this application is provided below in conjunction with the accompanying drawings and specific embodiments. It should be noted that when an element is referred to as being "fixed to" another element, the element may be directly fixed to the another element, or there may be one or more elements therebetween. When an element is referred to as being "connected to" another element, the element may be directly connected to the another element, or there may be one or more elements therebetween. The orientations or positional relationships indicated by the terms "upper", "lower", "inside", "outside", "perpendicular, "horizontal", and the like used herein are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", and the like are merely for the purpose of description and shall not be understood as any indication or implication of relative importance.

Unless otherwise defined, all technical and scientific terms used herein shall have the same meanings as commonly understood by persons skilled in the art to which this application belongs. Terms used in the specification of this application are merely for the purpose of describing specific embodiments and are not intended to limit this application. The term "and/or" used in this specification includes any and all combinations of one or more associated items listed.

In addition, technical features involved in different embodiments of this application described below may be combined as long as they do not conflict with each other.

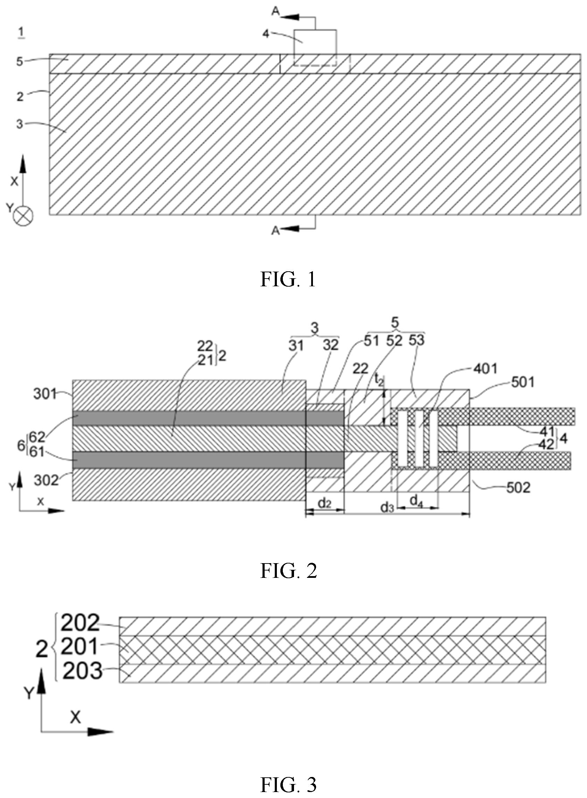

As shown in FIG. 1, an embodiment of this application provides an electrode plate 1 including a current collector 2, an active material layer 3, a conductive member 4, and an insulating layer 5. The active material layer 3 is disposed on two opposite surfaces of the current collector 2. The conductive member 4 is connected to the current collector 2. The insulating layer 5 covers the conductive member 4, a portion of the current collector 2, and an edge portion of the active material layer 3.

Understandably, during manufacturing of the electrode plate 1, applying the insulating layer 5 can reduce a risk of burr exposure on a surface of the conductive member 4 and a region of the current collector 2 that is not covered by the active material layer 3, thereby reducing a risk of short-circuiting between electrode plates 1 of different polarities due to burrs during manufacturing of a secondary battery. Therefore, the provision of the insulating layer 5 can be conducive to improving safety performance of the secondary battery.

The inventors of this application have found that, in a current manufacturing process of an electrode plate 1 for a secondary battery, applying an active material to form an active material layer 3 and applying an insulating material to form an insulating layer 5 are performed simultaneously. A portion of the insulating layer 5 covers the active material layer 3, and a thickness at an overlapping position of the insulating layer 5 and the active material layer 3 is greater than that of other regions of the electrode plate 1. When such electrode plate 1 is used to manufacture an electrode assembly, a thick region of the electrode plate 1 in the electrode assembly is thicker than other regions of the electrode assembly, affecting the energy density of the secondary battery.

To alleviate the situation that an overlapping position of the insulating layer 5 and the active material layer 3 in the electrode plate 1 is thick, the inventors of this application have found that thinning an edge portion of the active material layer can improve a condition of excessive thickness at an edge of the electrode plate. The specific solution is as follows:

As shown in FIG. 1 and FIG. 2, the electrode plate 1 provided by this embodiment of this application includes a current collector 2, an active material layer 3, a conductive member 4, and an insulating layer 5. The current collector 2 includes a first portion 21 and a second portion 22 adjacently disposed along a first direction X. The first portion 21 is configured to accommodate the active material layer 3, and the second portion 22 is configured to be connected to the conductive member 4. In other words, the first portion 21 is a part of the current collector 2 that needs to be coated with an active material, and the second portion 22 is a part of the current collector 2 that does not need to be coated with an active material. As shown in FIG. 2, the active material layer 3 includes a first covering portion 31 and a second covering portion 32 sequentially disposed along the first direction X. Along a thickness direction Y of the current collector 2, a thickness of the second covering portion 32 is less than a thickness of the first covering portion 31, meaning that a thickness of the active material layer 3 disposed on the first portion 21 along the thickness direction Y of the current collector 2 is not uniform. The insulating layer 5 is disposed on the second portion, on at least part of a surface of the conductive member away from the current collector, and on at least part of a surface of the second covering portion away from the current collector.

In this way, when the insulating layer 5 covers the active material layer 3, a space obtained from a thickness difference between the second covering portion 32 and the first covering portion 31 in the active material layer 3 can be utilized to reduce a thickness at an overlapping position of the insulating layer 5 and the active material layer 3, thereby reducing a risk of excessive thickness at the overlapping position of the active material layer 3 and the insulating layer 5 caused by the insulating layer 5 being applied onto an edge of the active material layer 3, which is conducive to increasing the energy density of the secondary battery. In addition, the insulating layer 5 can reduce a risk of burr exposure on the conductive member 4 and the second portion 22, thereby reducing a risk of short-circuiting of the electrode plate due to burrs piercing a separator in a secondary battery made from this electrode plate 1, which is conducive to improving safety of the secondary battery.

In some embodiments, the current collector 2 may be directly made of a conductive metal, such as copper foil or aluminum foil, or may be a composite current collector of a three-layer sandwich structure, and may be specifically configured as needed. In this embodiment, as shown in FIG. 3, the current collector 2 adopts a composite current collector structure, meaning that the current collector 2 includes a base layer 201, a first conductive layer 202, and a second conductive layer 203. The first conductive layer 202 is disposed on one surface of the base layer 201, and the second conductive layer 203 is disposed on another surface of the base layer 201. End surfaces of the first conductive layer 202 and the second conductive layer 203 away from the base layer 201 are both provided with the active material layer 3. The thickness direction Y of the current collector 2 refers to a stacking direction of the first conductive layer 202, the base layer 201, and the second conductive layer 203.

The base layer 201 is made of an insulating polymer material, possessing high structural strength, low density, and low mass, and capable of reducing a thickness of the current collector 2 and lightening a weight of the current collector 2. The first conductive layer 202 and the second conductive layer 203 are made of metal materials. As compared with a conventional current collector 2 made of metal, thicknesses of the first conductive layer 202 and the second conductive layer 203 disposed on both sides of the base layer 201 are reduced. When the current collector 2 has a mechanical damage caused by an external impact, generation of metal burrs is reduced, thereby reducing a risk of short-circuiting.

In some embodiments, the polymer material includes one or more of polyethylene terephthalate (Polyethyleneterephthalate, PET), polypropylene (Polypropylene, PP), polyethylene (Polyethylene, PE), polyimide (Polyimide, PI), polyetherketone (Polyetherketone, PEK), and polyphenylene sulphide (Polyphenylenesulphide, PPS).

In some embodiments, the active material layer 3 is formed by applying an active material onto the first portion 21 of the current collector 2, followed by rolling and drying. Depending on a polarity of the electrode plate 1 to be manufactured, the active material applied onto the electrode plate 1 varies. For example, when the electrode plate 1 is a positive electrode plate, the active material includes lithium cobalt oxide, lithium manganese oxide, lithium iron phosphate, lithium nickel oxide, lithium nickel cobalt manganese oxide, or the like. When the electrode plate 1 is a negative electrode plate, the active material includes graphite, lithium titanate, or a carbon material similar to a graphite structure. In this embodiment, as shown in FIG. 2, the active material layer 3 includes a first active material layer 301 and a second active material layer 302. The first active material layer 301 is disposed on the first conductive layer 202, and the second active material layer 302 is disposed on the second conductive layer 203. The first active material layer 301 and the second active material layer 302 each include the first covering portion 31 and the second covering portion 32, with the second covering portions 32 of both the first active material layer 301 and the second active material layer 302 being located on a same side of the current collector 2.

In some embodiments, the conductive member 4 may be made of one or more materials including aluminum, copper, nickel, silver, gold, iron, or the like, as long as conductivity is achieved. This may be specifically configured as needed. In this embodiment, the conductive member 4 is an aluminum foil. As shown in FIG. 2, the conductive member 4 includes a first conductive member 41 and a second conductive member 42. The first conductive member 41 is connected to the first conductive layer 202, and the second conductive member 42 is connected to the second conductive layer 203. In this way, connection with the electrode plate 1 can be achieved by respective connection with the first conductive layer 202 and the second conductive layer 203.

In some embodiments, along the thickness direction Y of the current collector 2, a thickness range of the first conductive member 41 and the second conductive member 42 is 8 µm to 20 µm. The thickness of the first conductive member 41 and the thickness of the second conductive member 42 may be the same or different. This may be specifically configured as needed.

In some embodiments, when viewed along the thickness direction Y of the current collector 2, in the first direction X, the conductive member 4 extends beyond an edge of the insulating layer 5, meaning that a portion of the conductive member 4 is connected to the current collector 2, while another portion extends beyond the insulating layer 5 and an edge of the current collector 2. This facilitates connection of the outside to the conductive member 4 to achieve electrical connection with the current collector 2. Along the first direction X, sizes of the first conductive member 41 and the second conductive member 42 may be the same or different, which is specifically configured as needed.

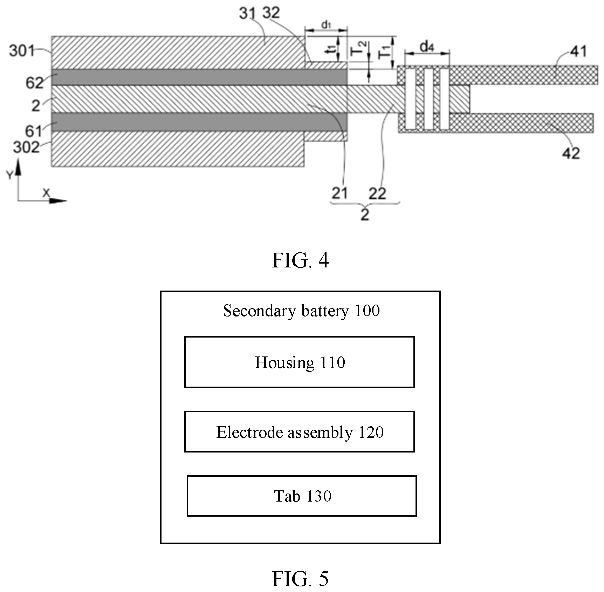

In some embodiments, as shown in FIG. 4, along the thickness direction Y of the current collector 2, the thickness of the first covering portion 31 is denoted as T₁, and the thickness of the second covering portion 32 is denoted as T₂. The thickness T₁ of the first covering portion 31 is greater than the thickness T₂ of the second covering portion 32. A difference between the thickness T₁ of the first covering portion 31 and the thickness T₂ of the second covering portion 32 is denoted as t₁ µm, satisfying 10 µm < t₁ ≤ 50 µm.

When t₁ < 10 µm, there is a risk of excessive thickness at a region where the insulating layer 5 covers the second covering portion 32. When t₁ > 50 µm, application of the insulating layer 5 is affected, and a supporting force received by the conductive member 4 decreases, causing the conductive member 4 to sag easily. During manufacturing, a region where the conductive member 4 is located is prone to wrinkling or folding when the electrode plate is wound or unwound. In this way, the thickness of the electrode plate 1 at the second covering portion 32 is relatively appropriate, reducing a risk of wrinkling or folding during winding or unwinding of the electrode plate 1 in the manufacturing process, and reducing a risk of capacity reduction of the secondary battery due to loss of active material.

In some embodiments, as shown in FIG. 4, along the first direction X, a width of the second covering portion 32 is denoted as d₁, satisfying 1 mm < d₁ ≤ 2 mm. In this way, the width of the second covering portion 32 along the first direction X is relatively appropriate, reducing a risk of poor contact caused by a large spacing between the positive electrode plate 1 and the negative electrode plate 1 of the secondary battery in the thickness direction Y of the current collector 2 due to a thin region where the second covering portion 32 of the electrode plate 1 is located in the secondary battery. In addition, the width of the second covering portion 32 in the first direction X being greater than 1 mm reduces a risk of the insulating layer 5 failing to cover the second covering portion 32 due to deviations in double-sided application of the active material on the electrode plate 1. This is conducive to improving stability of the secondary battery.

In some embodiments, 1 mm < d₁ ≤ 1.5 mm. In this way, the risk of poor contact caused by a large spacing between the positive electrode plate and the negative electrode plate of the secondary battery made from this electrode plate, as well as the risk of the insulating layer 5 failing to cover the second covering portion 32 due to deviations in double-sided application of the active material on the electrode plate 1 can be further reduced.

Understandably, an application range of an insulating material forming the insulating layer 5 is predetermined. When the electrode plate 1 is flipped between a front side and a back side to be coated with the active material, it is difficult to ensure alignment of the active material layer applied onto the front side and the active material layer applied onto the back side, meaning that a boundary line between the active material layers on the front side and the back side of the electrode plate 1 may have deviations. Therefore, a size of the second covering portion 32 needs to be increased, meaning the size of the second covering portion 32 needs to be greater than 1 mm to ensure that the insulating material forming the insulating layer 5 is applied onto the second covering portion 32 during manufacturing.

In some embodiments, the insulating layer 5 may be made of insulating materials including inorganic ceramics, non-conductive organic polymer layers, or the like. Along the first direction X, the insulating layer 5 sequentially includes a first insulating portion 51, a second insulating portion 52, and a third insulating portion 53. The first insulating portion 51 covers the first covering portion 31, the second insulating portion 52 covers a portion of the second portion 22, and the third insulating portion 53 covers a portion of the conductive member 4 and a portion of the second portion 22. As shown in FIG. 2, a thickness of the second insulating portion 52 is greater than thicknesses of the first insulating portion 51 and the third insulating portion 53.

In some embodiments, as shown in FIG. 2, along the first direction X, a width of the first insulating portion 51 is denoted as d₂, satisfying 0.1 mm < d₂ ≤ 1.6 mm. When d₂ < 0.1 mm, the first insulating portion 51 cannot be applied onto the second covering portion 32. When d₂ > 1.6 mm, the first insulating portion 51 covers too much of the second covering portion 32, and the active material beneath the first insulating layer 51 cannot function, affecting the capacity of the secondary battery. Therefore, when the width d₂ of the first insulating portion satisfies 0.1 mm < d₂ ≤ 1.6 mm, a region where the first insulating portion 51 covers the second covering portion 32 is relatively appropriate, reducing a risk of affecting the energy density of the secondary battery due to the first insulating portion 51 covering too much of the active material, which is conducive to increasing the capacity of the secondary battery.

In some embodiments, 0.1 mm < d₂ ≤ 1 mm. This can further ensure that the insulating material is applied onto the second covering portion 32 while preventing the first insulating portion 51 from covering too much of the second covering portion 32.

In some embodiments, as shown in FIG. 2, along the first direction X, a width of the insulating layer 5 is denoted as d₃, satisfying 1.2 mm < d₃ < 5 mm.

When d₃ is less than 1.2 mm, the insulating layer 5 cannot cover an entire size gap between a positive electrode plate and a negative electrode plate in an electrode assembly made from this electrode plate 1 for a secondary battery, posing a risk of the negative electrode plate extending beyond the insulating layer 5 and contacting a tab of the positive electrode plate, thereby leading to internal short-circuiting. When d₃ is greater than 5 mm, the insulating layer 5 affects a welding position of the tab during subsequent manufacturing of the secondary battery, and an extended width of the conductive member is required for tab welding, resulting in space loss and affecting the energy density. Thus, the width d₃ of the insulating layer satisfying 1.2 mm < d₃ < 5 mm is conducive to increasing the energy density and safety of the secondary battery made from this electrode plate.

In some embodiments, along the thickness direction Y of the current collector 2, a thickness of the insulating layer 5 is denoted as t₂, meaning a width of the second insulating portion 52 satisfies 10 µm < t₂ ≤ 50 µm.

When t₂ ≤ 10 µm, the insulating layer 5 cannot cover an entire region where the conductive member 4 is connected to the second portion 22 during manufacturing of the electrode plate, resulting in a risk of internal short-circuiting during manufacturing of a secondary battery. When t₂ > 50 µm, a thickness at the second insulating portion 52 exceeds a sum of thicknesses of the first portion 21 and the active material layer 3, posing a risk of excessive thickness at a head portion of the secondary battery. In this way, 10 µm < t₂ ≤ 50 µm reduces a risk of excessive thickness in a region where the second portion 22 of the electrode plate 1 is located, which is conducive to reducing a risk of edge bulging during winding of the electrode plate 1.

In some embodiments, as shown in FIG. 2, two insulating layers 5 are provided, namely a first insulating layer 501 and a second insulating layer 502. When viewed along the thickness direction Y of the current collector 2, the first insulating layer 501 covers the first conductive member 41, the second covering portion 32 of the first active material layer 301, and one side of the second portion 22, while the second insulating layer 502 covers the second conductive member 42, the second covering portion 32 of the second active material layer 302, and another side of the second portion 22. Understandably, thicknesses of the first insulating layer 501 and the second insulating layer 502 may be the same or different. This may be specifically configured as needed.

In some embodiments, as shown in FIG. 2, the conductive member 4 and the second portion 22 are connected by roll welding to form a weld mark portion 401. A size of the weld mark portion 401 in the first direction X is denoted as d₄, satisfying 1 mm < d₄ < 5 mm.

When d₄ < 1 mm, a yield rate and welding strength of the roll welding process decrease, which is detrimental to connection between the conductive member 4 and the second portion 22. When d₄ > 5 mm, a welding position between the tab and the conductive member 4 during manufacturing of the secondary battery is affected, and an extended length of the conductive member 4 is required to achieve the connection between the conductive member 4 and the tab, resulting in space loss. In this way, 1 mm < d₄ < 5 mm can enhance the connection strength between the conductive member 4 and the second portion 22 and is also conducive to providing an appropriate welding position between the conductive member 4 and the second portion 22, thereby increasing the energy density during manufacturing of an electrode plate of a secondary battery.

In some embodiments, along the thickness direction Y of the current collector 2, a thickness range of the weld mark portion 401 is 20 µm to 50 µm. This facilitates reliable welding between the conductive member 4 and the second portion 22, reduces a risk of poor welding due to an excessively small size of the weld mark portion 401, and is conducive to improving the stability of the secondary battery. When the thickness of the weld mark portion 401 is less than 20 µm, limitations from thicknesses of the conductive member 4 and the current collector 2 result in over-welding during welding, making the conductive member prone to detachment. When the thickness of the weld mark portion 401 is greater than 50 µm, a sum of thicknesses of the insulating layer 5 and the weld mark portion 401 is greater than a thickness of the active material layer 3 on the current collector 2, posing a risk of excessive thickness at a head portion of the secondary battery made from this electrode plate.

In some embodiments, as shown in FIG. 2, the electrode plate 1 further includes an undercoating layer 6. Along the thickness direction Y of the current collector 2, the undercoating layer 6 is disposed between the first portion 21 and the active material layer 3. The undercoating layer 6 can enhance adhesion strength between the current collector 2 and the active material in the active material layer 3, reducing a risk of the active material in the active material layer 3 detaching from the current collector 2. In this embodiment, the undercoating layer 6 includes a first undercoating layer 61 and a second undercoating layer 62. The first undercoating layer 61 is disposed between the first conductive layer 202 and the first active material layer 301, and the second undercoating layer 62 is disposed between the second conductive layer 203 and the second active material layer 302.

In some embodiments, along the first direction X, a distance between the first undercoating layer 61 and the first conductive member 41 is 0 to 0.5 mm, and a distance between the first undercoating layer 61 and the weld mark portion 401 is 0 to 1 mm. Similarly, along the first direction X, a distance between the second undercoating layer 62 and the second conductive member 42 is 0 to 0.5 mm, and a distance between the second undercoating layer 62 and the weld mark portion 401 is 0 to 1 mm.

The electrode plate 1 provided by some embodiments of this application includes a current collector 2, an active material layer 3, a conductive member 4, and an insulating layer 5. The current collector 2 includes a first portion 21 and a second portion 22 adjacently disposed along a first direction X. The active material layer 3 is disposed on the first portion 21, and the active material layer 3 includes a first covering portion 31 and a second covering portion 32 sequentially disposed along the first direction X. Along the thickness direction Y of the current collector 2, the thickness of the second covering portion 32 is less than the thickness of the first covering portion 31. The conductive member 4 is connected to the second portion 22. The insulating layer 5 covers the second portion 22, at least part of the conductive member 4, and a surface of at least part of the second covering portion 32 away from the current collector 2. Compared with existing electrode plates 1, the electrode plate 1 with the above structure can reduce a risk of excessive thickness at an edge of the active material layer 3 caused by the insulating layer 5 being applied onto the active material layer 3 during manufacturing, which is conducive to increasing the energy density of the secondary battery.

Table 1 below presents an experiment results using the electrode plate 1 with the above structure as a negative electrode plate 1 in an electrode assembly of a secondary battery. The experiment was performed at a room temperature of 45°C, with 1000 experimental samples provided. The energy density, defect rate, and yield rate of insulating layer application were measured for secondary batteries in which the first covering portions 31 and the second covering portions 32 have different thickness differences and the second covering portions 32 have different widths.

The defect rate refers to a percentage of secondary batteries exhibiting head collapse among those tested in a drop test at the same height. The c yield rate of insulating layer application refers to a yield rate of application of the insulating layer. Deviation in application size of the insulating layer as well as a small thickness or large thickness of the insulating layer all affect the yield rate of insulating layer application.

**Table 1 Effects of different thickness differences t₁ and different widths d₁ on secondary battery**

| | Size of second covering portion d₁ (mm) | Thickness difference t₁ (µm) | Energy density ED (WH/L) | Defect rate % | Yield rate of insulating layer application |
|---|---|---|---|---|---|
| Comparative example | 0 | 25 | 702 | 0% | 20% |
| Example 1 | 0.5 | 25 | 736 | 0% | 40% |
| Example 2 | 1 | 25 | 780 | 0% | 70% |
| Example 3 | 1.5 | 25 | 778 | 0.03% | 95% |
| Example 4 | 2 | 25 | 776 | 0.3% | 90% |
| Example 5 | 2.5 | 25 | 774 | 2% | 85% |
| Example 6 | 1.5 | 5 | 741 | 0% | 70% |
| Example 7 | 1.5 | 10 | 769 | 0.01% | 80% |
| Example 8 | 1.5 | 20 | 778 | 0.03% | 95% |
| Example 9 | 1.5 | 30 | 778 | 0.05% | 95% |
| Example 10 | 1.5 | 40 | 778 | 0.1% | 80% |
| Example 11 | 1.5 | 50 | 778 | 2% | 70% |
| Example 12 | 1.5 | 60 | 778 | 3% | 60% |

In Table 1 above, in the second covering portion in the comparative example, the size d₁ = 0 mm means that the active material layer of the electrode plate in the secondary battery does not have a second covering portion, and the thickness difference t₁ = 25 µm means that the thickness difference t₁ is a thickness of 25 µm of the active material layer when the second covering portion is absent.

From Examples 1 to 5 in Table 1, it can be seen that when the thickness difference t₁ between the thickness T₁ of the first covering portion 31 and the thickness T₂ of the second covering portion 32 remains constant, the width d₁ of the second covering portion 32 along the first direction X affects both the energy density and cycle number of the secondary battery.

Moreover, from a comparison between Example 4 and Example 5, it can be seen that when the value of the width d₁ of the second covering portion 32 satisfies 1 mm ≤ d₁ ≤ 2 mm, the yield rate of insulating layer application is higher, facilitating manufacturing of the electrode plate, and the defect rate of the secondary battery is relatively low. This is because when the width d₁ of the second covering portion 32 satisfies the above relationship, in the thickness direction of the secondary battery, the positive electrode plate 1 and the negative electrode plate 1 of the secondary battery can closely fit in a region where the second covering portion 32 is located during stacking, reducing a risk of depression in the region where the second covering portion 32 is located in the secondary battery during a drop, thereby improving the stability of the secondary battery.

From Examples 6 to 12 in Table 1, it can be seen that when the width of the second covering portion 32 is the same, along the thickness direction Y of the current collector 2, when the thickness difference t₁ between the thickness T₁ of the first covering portion 31 and the thickness T₂ of the second covering portion 32 satisfying 10 µm ≤ t₁ ≤ 50 µm, the energy density ED of the secondary battery is within a preferable range. This is because during manufacturing, the thickness of the electrode plate 1 at the second covering portion 32 is relatively appropriate, reducing a risk of wrinkling or folding during winding or unwinding of the electrode plate 1, and reducing a risk of capacity reduction due to loss of active material.

Table 2 below shows effects of different values of the width d₂ of the first insulating portion on the energy density of the secondary battery and a process yield rate during processing, where the process yield rate refers to a yield rate of application of an insulating material on the electrode plate.

**Table 2 Effects of different values of width d₂ of first insulating portion on secondary battery**

| | Width of first insulating portion d₂ | Total width of insulating layer | Energy density | Process yield rate % |
|---|---|---|---|---|
| Example 1 | 0 mm | 3 mm | 783 | 10% |
| Example 2 | 0.1 mm | 3 mm | 780 | 97% |
| Example 3 | 1.0 mm | 3 mm | 777 | 93% |
| Example 4 | 1.2 mm | 3 mm | 774 | 75% |
| Example 5 | 1.6 mm | 3 mm | 771 | 63% |
| Example 6 | 2 mm | 3 mm | 768 | 30% |
| Example 7 | 2.4 mm | 3 mm | 765 | 30% |

From Examples 1 to 7 in Table 2, it can be seen that when the width d₂ of the first insulating portion 51 exceeds 1 mm, the process yield rate gradually decreases. When 0.1 mm < d₂ ≤ 1.6 mm, the process yield rate is relatively high, facilitating the application of the insulating material during manufacturing of the secondary battery.

As shown in FIG. 5, a secondary battery 100 provided by another embodiment of this application includes a housing 110, an electrode assembly 120, and a tab 130. The electrode assembly 120 is accommodated within the housing 110, and the tab 130 is connected to the electrode assembly 120. The electrode assembly 120 includes a positive electrode plate 121, a negative electrode plate 122, and a separator 123. The positive electrode plate 121 and the negative electrode plate 122 have opposite polarities, and the separator 123 is disposed between the positive electrode plate 121 and the negative electrode plate 122. In this embodiment, the tab 130 is connected to a conductive member 4 of the positive electrode plate 121 or the negative electrode plate 122.

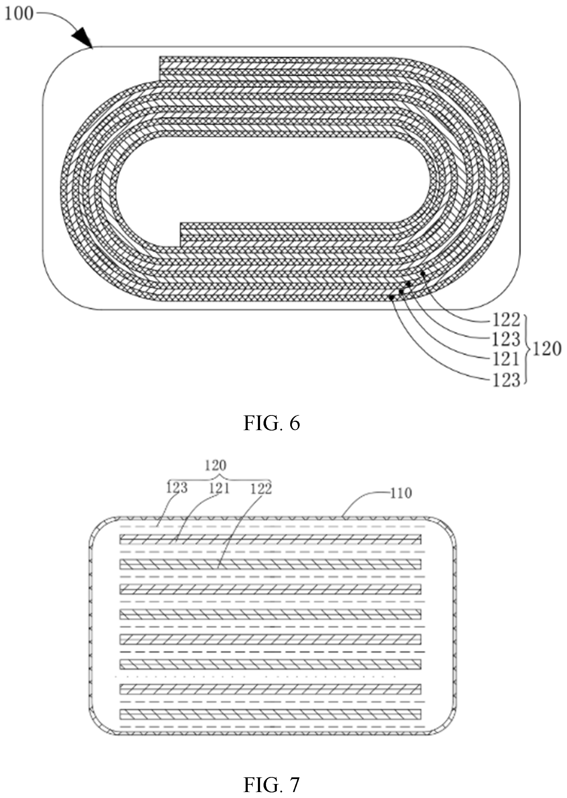

In some embodiments, the electrode assembly 120 may be a wound structure or a laminated structure. When the electrode assembly 120 is a wound structure, as shown in FIG. 6, the positive electrode plate 121, the separator 123, and the negative electrode plate 122 are sequentially stacked and then wound. When the electrode assembly 120 is a laminated structure, as shown in FIG. 7, a plurality of positive electrode plates 121, negative electrode plates 122, and separators 123 are provided; and the plurality of positive electrode plates 121, the plurality of separators 123, and the plurality of negative electrode plates 122 are stacked along one direction, with an insulating separator 123 disposed between adjacent positive electrode plate 121 and negative electrode plate 122.

Understandably, either the positive electrode plate 121 or the negative electrode plate 122 may adopt the structure of the electrode plate 1 in the above embodiments. One end of the tab 130 is connected to the conductive member 4, and another end of the tab 130 may extend out of the housing 110 for connection with an external electric device.

In the secondary battery 100 provided by some embodiments of this application, when an electrode assembly 120 is made using the structure of the electrode plate 1 of the above embodiments, a risk of excessive thickness in a covered region due to the insulating layer 5 covering the active material layer 3 can be reduced, facilitating a reduction in an overall thickness of the secondary battery 100 and increasing the energy density of the secondary battery 100.

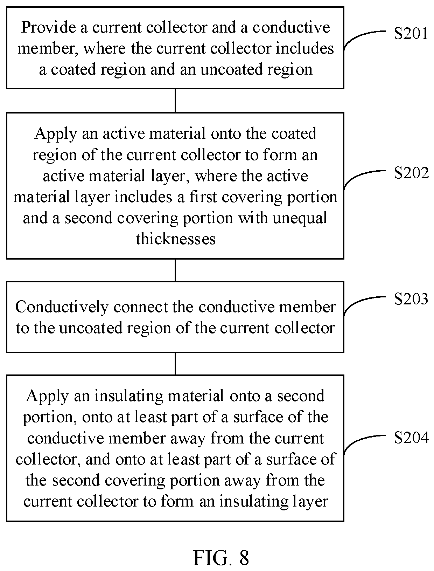

As shown in FIG. 8, still another embodiment of this application provides a manufacturing method of electrode plate 1, for manufacturing the electrode plate 1 of the above embodiments. The manufacturing method of electrode plate 1 includes the following steps.

Step S201: Provide the current collector 2 and conductive member 4, where the current collector 2 includes a coated region and an uncoated region.

Step S202: Apply an active material onto the coated region of the current collector 2 to form an active material layer 3, where the active material layer 3 includes a first covering portion 31 and a second covering portion 32 with unequal thicknesses.

Step S203: Conductively connect the conductive member 4 to the uncoated region of the current collector 2.

The conductive member 4 may conductively connected to the uncoated region of the current collector 2 by roll welding or by other means. This may be specifically configured as needed, such as being connected by riveting.

Step S204: Apply an insulating material onto a second portion 22, onto at least part of a surface of the conductive member 4 away from the current collector 2, and onto at least part of a surface of the second covering portion 32 away from the current collector 2 to form an insulating layer 5.

In some embodiments, the following step is further included between Step S201 and Step S202.

Step S205: Apply an undercoating to the coated region of the current collector 2 to form an undercoating layer 6.

As compared with conventional manufacturing methods in which an insulating material of the insulating layer and an active material layer are applied simultaneously before a conductive member is connected to an uncoated region, this method poses a risk of excessive thickness in a region where the conductive member is connected to the uncoated region due to a lack of overlap between the region and the insulating material forming the insulating layer. Additionally, since the conductive member is connected to the uncoated region after being coated with the insulating material, there is a risk of damaging the insulating layer during the connection process of the conductive member. In contrast, in this application, the electrode plate 1 is manufactured according to the above steps of this method. After the step of applying the active material, the conductive member 4 is connected to the uncoated region of the current collector 2, ensuring that the insulating material can cover a portion where the conductive member 4 is connected to the current collector 2 during application. This helps the insulating layer 5 formed by the insulating material to cover the region where the conductive member 4 is connected to the current collector 2, reducing a risk of burr exposure on a surface of the conductive member 4.

The above descriptions are merely some embodiments of this application and are not intended to limit the patent scope of this application. Any equivalent structural or procedural transformations made using the specification and accompanying drawings of this application, or direct or indirect application in other related technical fields, are similarly included within the patent protection scope of this application.

## Claims

1. An electrode plate, comprising:
a current collector, comprising a first portion and a second portion adjacently disposed along a first direction;
an active material layer, disposed on the first portion, wherein the active material layer comprises a first covering portion and a second covering portion sequentially disposed along the first direction, and along a thickness direction of the current collector, a thickness of the second covering portion is less than a thickness of the first covering portion;
a conductive member connected to the second portion; and
an insulating layer disposed on the second portion, on at least part of a surface of the conductive member away from the current collector, and on at least part of a surface of the second covering portion away from the current collector, wherein the first direction is perpendicular to the thickness direction of the current collector.

2. The electrode plate according to claim 1, wherein along the thickness direction of the current collector, a difference between the thickness of the first covering portion and the thickness of the second covering portion is denoted as t₁, satisfying 10 µm < t₁ ≤ 50 µm.

3. The electrode plate according to claim 1, wherein along the first direction, a width of the second covering portion is denoted as d₁, satisfying 1 mm < d₁ ≤ 2 mm.

4. The electrode plate according to claim 3, wherein 1 mm < d₁ ≤ 1.5 mm.

5. The electrode plate according to claim 1, wherein the insulating layer comprises a first insulating portion overlapping with the first covering portion, and along the first direction, a width of the first insulating portion is denoted as d₂, satisfying 0.1 mm < d₂ ≤ 1.6 mm.

6. The electrode plate according to claim 5, wherein 0.1 mm < d₂ ≤ 1 mm.

7. The electrode plate according to claim 1, wherein the insulating layer comprises a first insulating portion, a second insulating portion, and a third insulating portion; the first insulating portion, the second insulating portion, and the third insulating portion are sequentially disposed along the first direction; the first insulating portion overlaps with the first covering portion; the third insulating portion covers the surface of the conductive member away from the current collector; and along the thickness direction of the current collector, a thickness of the second insulating portion is denoted as t₂, satisfying 10 µm < t₂ ≤ 50 µm;
and/or, along the first direction, a width of the insulating layer is denoted as d₃, satisfying 1.2 mm < d₃ < 5 mm.

8. The electrode plate according to claim 1, wherein the conductive member and the second portion are connected by roll welding to form a weld mark portion, and a size of the weld mark portion in the first direction is denoted as d₄, satisfying 1 mm < d₄ < 5 mm.

9. The electrode plate according to any one of claims 1 to 8, further comprising an undercoating layer, wherein along the thickness direction of the current collector, the undercoating layer is disposed between the first portion and the active material layer.

10. The electrode plate according to claim 9, wherein the active material layer comprises a first active material layer and a second active material layer, and the undercoating layer comprises a first undercoating layer and a second undercoating layer; and
the current collector comprises a base layer, a first conductive layer, and a second conductive layer, the first conductive layer is disposed on one surface of the base layer, and the second conductive layer is disposed on another surface of the base layer, wherein an end surface of the first conductive layer away from the base layer is sequentially provided with the first undercoating layer and the first active material layer, an end surface of the second conductive layer away from the base layer is sequentially provided with the second undercoating layer and the second active material layer, and the base layer is a polymer layer.

11. The electrode plate according to claim 10, wherein the conductive member comprises a first conductive member and a second conductive member, the first conductive member is connected to the first conductive layer, and the second conductive member is connected to the second conductive layer.

12. A secondary battery, comprising the electrode plate according to any one of claims 1 to 11.

13. An electric apparatus, comprising the secondary battery according to claim 12.

14. A manufacturing method of electrode plate for manufacturing the electrode plate according to any one of claims 1 to 11, wherein the manufacturing method comprises:
step1: providing the current collector and conductive member, wherein the current collector comprises a coated region and an uncoated region;
step 2: applying an active material onto the coated region of the current collector to form the active material layer, wherein the active material layer comprises the first covering portion and the second covering portion with unequal thicknesses;
step 3: conductively connecting the conductive member to the uncoated region of the current collector; and
step 4: applying an insulating material onto the second portion, at least part of the surface of the conductive member away from the current collector, and at least part of the surface of the second covering portion away from the current collector to form the insulating layer.

15. The manufacturing method of electrode plate according to claim 14, wherein the conductive member is connected to the uncoated region of the current collector by roll welding.
